# EUROPÄISCHE PATENTANMELDUNG

(11) **EP 1 038 768 A1**
(43) Veröffentlichungstag der Anmeldung: **27.09.2000**
(21) Anmeldenummer: 00102562.6
(22) Anmeldetag: 07.02.2000
(51) Int. Cl.: B64D 11/00, H05B 37/02, F21S 2/00

(54) **Verfahren zum Schalten der Beleuchtungselemente einer Beleuchtungsanlage für eine Flugzeugkabine**

(30) Priorität: 18.03.1999 DE 19912165
(71) Anmelder: DaimlerChrysler Aerospace Airbus Gesellschaft mit beschränkter Haftung, 21129 Hamburg (DE)
(72) Erfinder: Kohlmeier-Beckmann, Carsten, 21614 Buxtehude (DE); Frey, Martin, 21244 Buchholz (DE)
(74) Vertreter: Hansmann, Dierk, Dipl.-Ing.

(57) **Zusammenfassung**

Verfahren zum Schalten der Beleuchtungselemente einer Beleuchtungsanlage für eine Flugzeugkabine unter Verwendung eines mikroprozessorgesteuerten Datenbus-Systems mit einem, einem Bedienungspanel zugeordneten Tastschalterfeld. Hierbei sind jedem Tastschalter eine Lichtbandposition, eine Klasse und eine Schaltfunktion zugeordnet.

Es wird eine Entlastung des Kabinenpersonals dahingehend erreicht, daß dieses nicht mehr selbst geeignete Lichtkonfigurationen auswählen muß. Hierzu ist vorgesehen, daß mit den Tasten des Tastschalterfeldes vorprogrammierte Szenarien, die sich direkt auf die während eines Fluges durchlaufenen Flugphasen beziehen, ausgewählt und geschaltet werden.

## Beschreibung

Die Erfindung betrifft ein Verfahren zum Schalten der Beleuchtungselemente einer Beleuchtungsanlage für eine Flugzeugkabine unter Verwendung eines mikroprozessorgesteuerten Datenbus-Systems mit einem, einem Bedienungspanel zugeordneten Tastschalterfeld, wobei jedem Tastschalter eine Lichtbandposition, eine Klasse und eine Schaltfunktion zugeordnet sind.

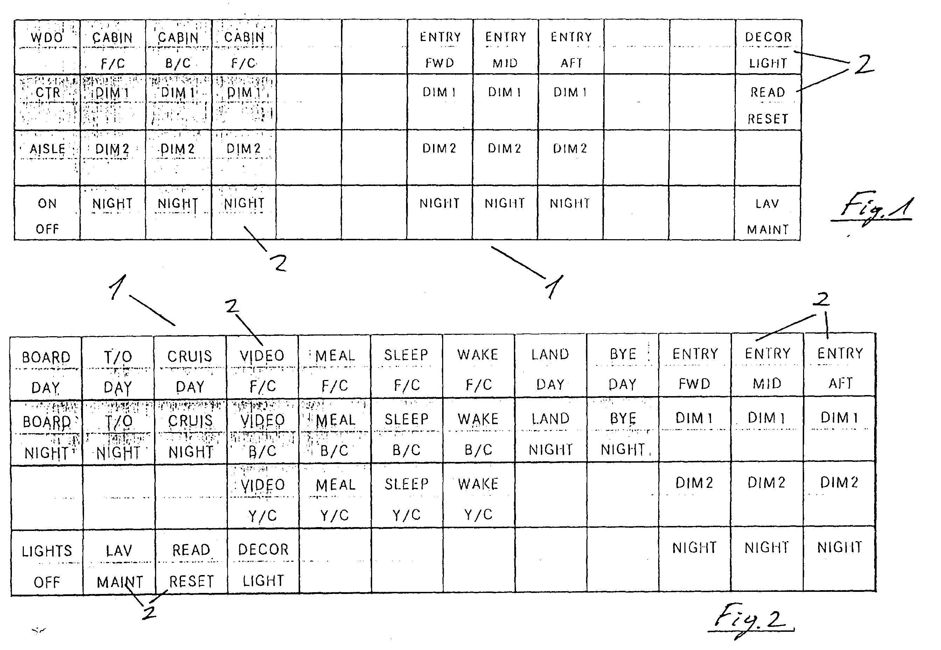

Nach diesem bekannten Verfahren lassen sich die Beleuchtungselemente einer Flugzeugkabinen-Beleuchtungsanlage durch das Kabinenpersonal individuell schalten, sowohl zonenweise (im Allgemeinen an die Klassen in einem Flugzeug angelehnt) wie auch lichtbandbezogen. Ein Tastschalterfeld 1 zur Verwirklichung dieses Verfahrens ist aus Fig. 1 ersichtlich, wo jedem Tastschalter 2 eine Lichtbandpostion (Window, Center oder Ailse), eine Klasse (F/C, B/c oder Y/C) und eine Schaltfunktion (Night, DIM1 DIM2 oder Bright) zugeordnet ist.

Der Erfindung liegt nun die Aufgabe zugrunde, bei einem Verfahren der eingangs genannten Art eine Entlastung des Kabinenpersonals dahingehend zu erreichen, daß das Personal nicht mehr selbst geeignete Lichtkonfigurationen auswählen muß.

Die Aufgabe wird erfindungsgemäß dadurch gelöst, daß mit den Tasten des Tastschalterfeldes vorprogrammierte Szenarien, die sich direkt auf die während eines Fluges durchlaufenen Flugphasen beziehen, ausgewählt und geschaltet werden.

In erfindungsgemäßen Ausgestaltungen wird vorgeschlagen,
- daß die den Szenarien zugehörigen Basisinformationen zentral in einer Datei abgelegt und verarbeitet werden, und
- daß die Bauelemente eines an sich bekannten mikroprozessorgeteuerten Datenbus-Systems zur Speicherung, Verarbeitung und zum Transfer der Daten verwendet werden.

Vorteile der Erfindung liegen - neben der direkten und situationsgerechten Szenarienauswahl durch das Kabinenpersonal - in der Möglichkeit nach einem den Wünschen der Fluggesellschaften entsprechenden flottenweiten gemeinschaftlichen Beleuchtungsdesign mit vorzugsweise seriellen Schnittstellen sowie in nahezu unbegrenzten programmierbaren Kombinationsmöglichkeiten.

In Fig. 2 ist ein Tastenschalterfeld 1 zur Durchführung des erfindungsgemäßen Verfahrens dargestellt, wobei die Tasten dieses Feldes mit 2 bezeichnet sind. Auf diesen Tasten finden sich vorprogrammierte Szenarien wieder, die sich direkt auf die während eines Fluges durchlaufenen Flugphasen beziehen. Die hierzu erforderlichen Datensätze können meßtechnisch ermittelt und vorzugsweise in den Bauelemente von bereits im Flugzeug verwendeten mikroprozessorgesteuerten Datenbus-Systemen gespeichert und auch verarbeitet werden. Beispielsweise können von dem Kabinenpersonal vorprogrammierte Beleuchtungs-Szenarien für folgende Vorgänge direkt und situationsgerecht ausgewählt werden:
Einstieg und/oder Ausstieg von Passagieren;
Start oder Landung des Flugzeuges;
Verpflegungs-, Schlaf- oder Filmvorführungsphasen während des Reisefluges;
Notfälle.

## Patentansprüche

1. Verfahren zum Schalten der Beleuchtungselemente einer Beleuchtungsanlage für eine Flugzeugkabine unter Verwendung eines mikroprozessorgesteuerten Datenbus-Systems mit einem, einem Bedienungspanel zugeordneten Tastschalterfeld, wobei jedem Tastschalter eine Lichtbandposition, eine Klasse und eine Schaltfunktion zugeordnet sind, dadurch gekennzeichnet, daß mit den Tasten (2) des Tastschalterfeldes (1) vorprogrammierte Szenarien, die sich direkt auf die während eines Fluges durchlaufenen Flugphasen beziehen, ausgewählt und geschaltet werden.

2. Verfahren nach Anspruch 1, dadurch gekennzeichnet, daß die den Szenarien zugehörigen Basisinformationen zentral in einer Datei abgelegt und verarbeitet werden.

3. Verfahren nach Anspruch 1 oder 2, dadurch gekennzeichnet, daß die Bauelemente des an sich bekannten mikroprozessorgesteuerten Datenbus-Systems zur Speicherung, Verarbeitung und zum Transfer der Daten verwendet werden.
